# EUROPÄISCHE PATENTSCHRIFT

(11) **EP 2 454 523 B1**
(45) Veröffentlichungstag und Bekanntmachung des Hinweises auf die Patenterteilung: **06.11.2013**
(21) Anmeldenummer: 10722127.7
(22) Anmeldetag: 08.06.2010
(51) Int. Cl.: F22B 29/08, F22B 1/00

(54) **VERFAHREN ZUR ERZEUGUNG VON ÜBERHITZTEM DAMPF AN EINEM SOLARTHERMISCHEN KRAFTWERK UND SOLARTHERMISCHES KRAFTWERK**
METHOD FOR GENERATING SUPERHEATED STEAM IN A SOLAR THERMAL POWER PLANT, AND SOLAR THERMAL POWER PLANT
PROCÉDÉ DE PRODUCTION DE VAPEUR SURCHAUFFÉE DANS UNE CENTRALE HÉLIOTHERMIQUE ET CENTRALE HÉLIOTHERMIQUE

(30) Priorität: 15.06.2009 DE 102009025455
(43) Veröffentlichungstag der Anmeldung: 23.05.2012
(73) Patentinhaber: Deutsches Zentrum für Luft- und Raumfahrt e.V., 51147 Köln (DE)
(72) Erfinder: FELDHOFF, Jan, Fabian, 70193 Stuttgart (DE); ECK, Markus, 71229 Leonberg (DE)
(74) Vertreter: Hoeger, Stellrecht & Partner Patentanwälte
(86) Internationale Anmeldenummer: PCT/EP2010/057982
(87) Internationale Veröffentlichungsnummer: WO 2010/145970

(56) Entgegenhaltungen:
- EP-A2- 2 053 242
- DE-A1-102006 021 972
- DE-A1-102007 005 562
- VALENZUELA L ET AL: "Control concepts for direct steam generation in parabolic troughs", SOLAR ENERGY, PERGAMON PRESS. OXFORD, GB, Bd. 78, Nr. 2, 1. Februar 2005 (2005-02-01), Seiten 301-311, XP027840611, ISSN: 0038-092X [gefunden am 2005-02-01]

## Beschreibung

Die Erfindung betrifft ein Verfahren zur Erzeugung von überhitztem Dampf an einem solarthermischen Kraftwerk, bei dem in einer Durchlaufstrecke für Wärmeträgermedium durch Solarenergie in einem Verdampferbereich Dampf erzeugt wird und in einem Überhitzerbereich durch Solarenergie der Dampf überhitzt wird.

Die Erfindung betrifft ferner ein solarthermisches Kraftwerk mit einer Dampferzeugungsstufe, wobei die Dampferzeugungsstufe mindestens einen Kollektorstrang mit einer Durchlaufstrecke für Wärmeträgermedium mit einem Verdampferbereich und einem Überhitzerbereich umfasst.

Am Übergang von dem Verdampferbereich zu dem Überhitzerbereich liegt der Verdampfungsendpunkt. Grundsätzlich können schwankende Energieeinträge durch Schwankungen in der solaren Bestrahlung zu einer Änderung des Orts des Verdampfungsendpunkts führen. Schwankungen dieses Orts, an dem die Verdampfung in Überhitzung übergeht, können zu hohen oszillierenden Temperaturgradienten in axialer Richtung innerhalb eines entsprechenden Führungsrohrs führen. Dies wiederum hat radiale und tangentiale Schwankungen zur Folge. Solche Temperaturgradienten verursachen thermische Spannungen in den entsprechenden Werkstoffen eines Führungsrohrs. Diese thermischen Spannungen verringern die Dauerfestigkeit der betroffenen Komponenten stark.

Beispielsweise aus der DE 101 52 968 C1 ist ein solarthermisches Kraftwerk bekannt, welches mindestens einen Solarkollektorstrang mit einem Verdampferstrang und einem Überhitzerstrang umfasst. Es ist eine Rezirkulationsleitung vorgesehen, mittels der flüssiges Wärmeübertragungsmedium aus dem Verdampferstrang rezirkulierbar ist. Bei dem Rezirkulationskonzept ist ein Abscheider vorgesehen, welcher aus dem von dem Verdampferstrang gelieferten Zwei-Phasen-Gemisch flüssiges Wärmeübertragungsmedium und Dampf voneinander trennt, wobei das flüssige Wärmeübertragungsmedium rezirkuliert wird und der Dampf dem Überhitzer zugeführt wird. Dadurch lässt sich der Verdampfungsendpunkt fixieren.

Aus der EP 2 053 242 A2 ist ein Verfahren zum Betreiben eines solarthermischen Kraftwerks bekannt, bei dem ein Wärmeträgermedium in einem Verdampferabschnitt durch Solarstrahlung unter Aufnahme von Wärme verdampft wird, wobei der Verdampferabschnitt eine Mehrzahl von Verdampfersträngen aufweist, auf welche das Wärmeträgermedium verteilt wird. Die Massenstromverteilung wird an dem Verdampferabschnitt geregelt, wobei die Massenströme individuell an allen oder einer Mehrheit der Verdampferstränge eingestellt werden und eine Regelgröße eine Größe ist, welche einen räumlichen Energieanstieg in einem jeweiligen Verdampferstrang in einem Bereich des Verdampferstrangs, in dem Wärmeträgermedium noch nicht verdampft ist, charakterisiert.

Der Erfindung liegt die Aufgabe zugrunde, ein Verfahren der eingangs genannten Art bereitzustellen, mit dem sich der Verdampfungsendpunkt mit geringem konstruktiven Aufwand fixieren lässt.

Diese Aufgabe wird bei dem eingangs genannten Verfahren erfindungsgemäß dadurch gelöst, dass ein Verdampfungsendpunkt des Verdampferbereichs in einem Regelungsverfahren örtlich fixiert wird, wobei ein räumlicher Temperaturgradient in dem Überhitzerbereich und eine Temperatur im Verdampferbereich bestimmt werden und der Massenstrom an Wärmeträgermedium in der Durchlaufstrecke in Abhängigkeit des Temperaturgradienten im Überhitzerbereich und der gemessenen Temperatur im Verdampferbereich eingestellt wird.

Es hat sich gezeigt, dass durch Nutzung des Temperaturgradienten im Überhitzerbereich und zusätzliche Nutzung einer gemessenen Temperatur im Verdampferbereich sich eine stabile Regelung realisieren lässt, bei der die räumliche Schwankungsbreite des Verdampfungsendpunkts in einem engen Bereich liegt.

Da beispielsweise ein Abscheider und eine Fördereinrichtung für die Rezirkulation von Kondensat im Vergleich zum Rezirkulationskonzept nicht notwendig sind, lässt sich ein solarthermisches Kraftwerk, bei dem das erfindungsgemäße Verfahren durchgeführt wird, mit geringeren Investitionskosten realisieren.

Das Gesamtsystem weist dabei geringere Wärmeverluste auf, da keine Zuleitungen und Ableitungen zu einem entsprechenden Abscheider benötigt werden.

Beispielsweise auch bei einem sehr schnellen starken Anstieg des Energieeintrags in einen Kollektorstrang kann durch eine schnelle Erhöhung des Massenstroms die Verschiebung des Verdampfungsendpunkts verhindert werden. Bei Systemen mit Abscheider ist in einem solchen Fall ein hoher Überschuss an flüssigem Wärmeträgermedium im Verdampferbereich notwendig, welcher höhere Pumpverluste verursacht.

Die durch Fixierung des Verdampfungsendpunkts erreichte Verminderung der Materialbelastungen erlaubt einen sicheren, langfristigen Betrieb mit einem Durchlaufkonzept.

Der erzeugte überhitzte Dampf wird beispielsweise zur Erzeugung von elektrischem Strom genutzt oder als Prozessdampf.

Insbesondere wird zur Fixierung des Verdampfungsendpunkts der Massenstrom des Wärmeträgermediums in der Durchlaufstrecke geregelt. Der Massenstrom lässt sich auf einfache Weise über Reglerventile einstellen.

Günstigerweise ist eine Regelgröße im Regelungsverfahren die räumliche Lage des Verdampfungsendpunkts, wobei eine Führungsgröße (Sollwert) ein definierter Ort ist. Aus der Ermittlung des Temperaturgradienten und der Temperatur im Verdampferbereich lässt sich der Istwert bestimmen und aus der Abweichung zu dem Sollwert lässt sich eine Stellgröße bilden, mit der wiederum der Massenstrom eingestellt werden kann.

Insbesondere beeinflusst eine Stellgröße im Regelungsverfahren den Massenstrom des Wärmeträgermediums in der Durchlaufstrecke. Die Stellgröße ist beispielsweise ein Ventilhub von einem oder mehreren Regelventilen.

Bei einer Ausführungsform werden im Regelungsverfahren der Temperaturgradient und die gemessene Temperatur im Verdampferbereich auf einen räumlichen Schnittpunkt extrapoliert und eine oder mehrere Stellgrößen werden durch eine Abweichung des Schnittpunkts von einer vorgegebenen räumlichen Lage des Verdampfungsendpunkts bestimmt. Dieser Schnittpunkt charakterisiert einen Istwert und die Abweichung zu dem Sollwert bildet die Stellgröße.

Günstigerweise wird die Temperatur im Verdampferbereich außerhalb eines Vorwärmbereichs gemessen. Im Vorwärmbereich nimmt das flüssige Wärmeträgermedium noch sensible Wärme auf.

Der Temperaturgradient im Überhitzerbereich wird vorteilhafterweise aus den gemessenen Temperaturen an mindestens zwei beabstandeten Orten im Überhitzerbereich ermittelt. Dadurch lässt sich der Temperaturanstieg im Überhitzerbereich bestimmen. Dies wiederum ermöglicht eine Extrapolation zur Bestimmung des Istwerts für den Verdampfungsendpunkt.

Bei einer vorteilhaften Ausführungsform wird flüssiges Wärmeträgermedium in den Verdampferbereich geregelt eingespritzt. Dadurch lässt sich der Massenstrom in der entsprechenden Durchlaufstrecke beeinflussen. Die Regelungsqualität lässt sich dadurch verbessern. Weiterhin lässt sich die Regelschnelligkeit stark erhöhen.

Insbesondere erfolgt die Einspritzung zwischen der Temperaturmessstelle im Verdampferbereich und dem Verdampfungsendpunkt. Dadurch ergibt sich eine optimierte Regelung.

Es ist ferner vorteilhafterweise vorgesehen, dass eine Austrittstemperatur am Überhitzerbereich auf einen konstanten Wert geregelt wird. Dadurch ergibt sich ein optimierter Wirkungsgrad für eine nachgeschaltete Turbine. Durch die Fixierung des Verdampfungsendpunkts kann die Austrittstemperatur ohne zusätzliche Maßnahmen variieren. Durch die entsprechende Regelung lässt sich die Austrittstemperatur fixieren.

Insbesondere wird dazu in den Überhitzerbereich geregelt flüssiges Wärmeträgermedium eingespritzt. Die Einspritzmenge bestimmt die Austrittstemperatur.

Der Erfindung liegt ferner die Aufgabe zugrunde, ein solarthermisches Kraftwerk der eingangs genannten Art bereitzustellen, welches in Alternative zu dem Rezirkulationskonzept eine Fixierung des Verdampfungsendpunkts ermöglicht.

Diese Aufgabe wird bei dem eingangs genannten solarthermischen Kraftwerk erfindungsgemäß dadurch gelöst, dass ein erster Temperatursensor vorgesehen ist, welcher an dem Verdampferbereich angeordnet ist, ein zweiter Temperatursensor und ein dritter Temperatursensor vorgesehen sind, welche beabstandet zueinander an dem Überhitzerbereich angeordnet sind, eine Massenstromregelungseinrichtung vorgesehen ist, durch welche der Massenstrom an Wärmeträgermedium in der Durchlaufstrecke einstellbar ist, und eine Regelungseinrichtung vorgesehen ist, welche signalwirksam mit dem ersten Temperatursensor, dem zweiten Temperatursensor und dem dritten Temperatursensor verbunden ist, aus einer zweiten Temperatur und einer dritten Temperatur einen räumlichen Temperaturgradienten bestimmt und die Massenstromregelungseinrichtung entsprechend ansteuert zur örtlichen Fixierung eines Verdampfungsendpunkts.

Das erfindungsgemäße solarthermische Kraftwerk weist die bereits im Zusammenhang mit dem erfindungsgemäßen Verfahren erläuterten Vorteile auf.

Weitere vorteilhafte Ausgestaltungen des erfindungsgemäßen solarthermischen Kraftwerks wurden ebenfalls bereits im Zusammenhang mit dem erfindungsgemäßen Verfahren erläutert.

Insbesondere ist an einem Anfang der Durchlaufstrecke ein Regelventil angeordnet, welches durch die Regelungseinrichtung angesteuert ist. Das Regelventil bildet einen Teil der Massenstromregelungseinrichtung. Über das Regelventil lässt sich auf einfache Weise der Massenstrom regeln und dadurch lässt sich auch bei variierenden Einstrahlungsbedingungen auf einfache Weise der Verdampfungsendpunkt fixieren.

Bei einer vorteilhaften Ausführungsform ist eine Einspritzeinrichtung zur Einspritzung von flüssigem Wärmeträgermedium mit mindestens einer Einspritzstelle in den Verdampferbereich vorgesehen. Die Einspritzeinrichtung ist Teil der Massenstromregelungseinrichtung. Über sie lässt sich der Massenstrom einstellen. Es lässt sich dadurch die Regelqualität erhöhen und die Regelungsgeschwindigkeit lässt sich erhöhen.

Insbesondere ist die Einspritzeinrichtung durch die Regelungseinrichtung angesteuert. Dadurch lässt sich der Verdampfungsendpunkt auf optimierte Weise fixieren.

Bei einer konstruktiv günstigen Ausführungsform umfasst die Einspritzeinrichtung ein Regelventil. Dadurch lässt sich auf einfache Weise der Massenstrom beeinflussen.

Günstigerweise liegt die mindestens eine Einspritzstelle der Einspritzeinrichtung zwischen einem Temperaturmesspunkt des ersten Temperatursensors und dem Verdampfungsendpunkt. Dadurch ergibt sich ein optimierter Regelprozess.

Es ist ferner günstig, wenn eine Einspritzeinrichtung zur Einspritzung von flüssigem Wärmeträgermedium mit mindestens einer Einspritzestelle in dem Überhitzerbereich vorgesehen ist. Dadurch lässt sich die Austrittstemperatur von überhitztem Wärmeträgermedium insbesondere auf einen konstanten Wert einregeln.

Günstigerweise ist eine solare Kollektoreinrichtung vorgesehen, an welcher die Durchlaufstrecke angeordnet ist. Die solare Kollektoreinrichtung kann auf unterschiedliche Weise ausgebildet sein. Sie kann beispielsweise einen oder mehrere Rinnenkollektoren umfassen. Grundsätzlich ist beispielsweise auch die Realisierung über einen Turmreceiver möglich.

Die Dampferzeugungsstufe ist insbesondere fluidwirksam mit mindestens einer Turbine verbunden. Es lässt sich dadurch auf einfache Weise elektrischer Strom erzeugen.

An dem erfindungsgemäßen solarthermischen Kraftwerk ist insbesondere das erfindungsgemäße Verfahren durchführbar.

Die nachfolgende Beschreibung bevorzugter Ausführungsformen dient im Zusammenhang mit den Zeichnungen der näheren Erläuterung der Erfindung. Es zeigen:
- Figur 1(a): eine schematische Darstellung des Durchlaufkonzepts zur solaren Erzeugung von überhitztem Dampf (Stand der Technik);
- Figur 1(b): eine schematische Darstellung des Rezirkulationskonzepts zur solaren Erzeugung von überhitztem Dampf (Stand der Technik);
- Figur 1(c): schematisch den Temperaturverlauf an einer Durchlaufstrecke bei der Erzeugung von überhitztem Dampf;
- Figur 2: eine schematische Blockbilddarstellung eines ersten Ausführungsbeispiels eines erfindungsgemäßen solarthermischen Kraftwerks;
- Figur 3: eine schematische Blockschaltbilddarstellung eines zweiten Ausführungsbeispiels eines erfindungsgemäßen solarthermischen Kraftwerks; und
- Figur 4: schematisch den Verlauf der Temperatur über der Länge an einer Durchlaufstrecke im Zusammenhang mit dem Ausführungsbeispiel eines erfindungsgemäßen Verfahrens.

Bei einem solarthermischen Kraftwerk wird Wärmeträgermedium durch Solarenergie erhitzt. Das erhitzte Wärmeträgermedium treibt eine Turbine an, wodurch an einem Generator ein elektrischer Strom erzeugt wird.

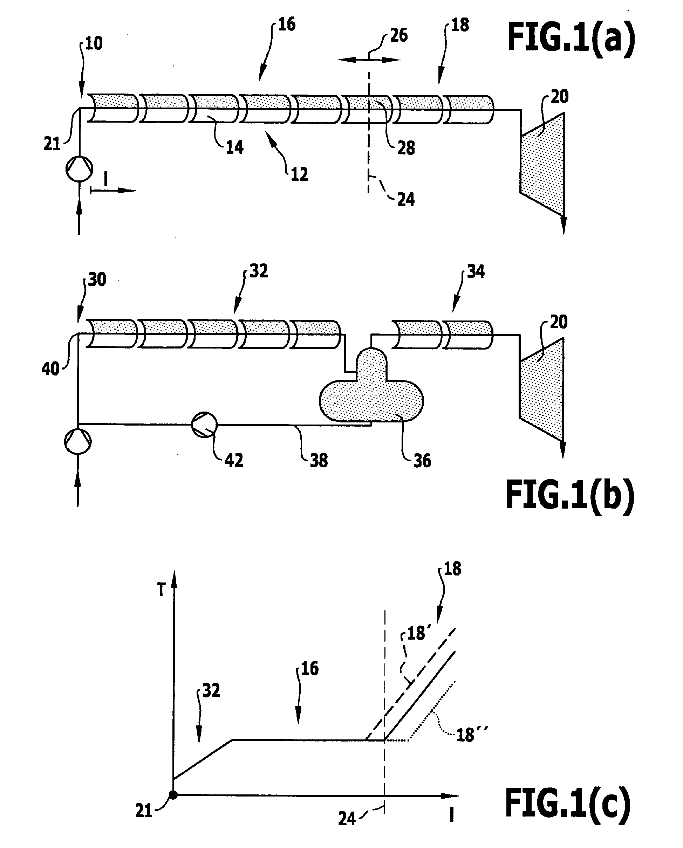

Bei einem Durchlaufprozess (Figur 1(a)), welcher aus dem Stand der Technik bekannt ist, ist eine Durchlaufstrecke 10 vorgesehen, an welcher eine solare Kollektoreinrichtung 12 angeordnet ist. Die solare Kollektoreinrichtung 12 ist beispielsweise durch eine Mehrzahl von Rinnenkollektoren 14 gebildet, welche seriell angeordnet sind. Bei der Durchströmung dieser Rinnenkollektoren 14 durch Wärmeträgermedium wird konzentrierte Solarstrahlung auf entsprechende Absorberrohre gerichtet und in den Absorberrohren strömendes Wärmeträgermedium wird erhitzt.

Bei dem Durchlaufkonzept umfasst die Durchlaufstrecke 10 einen Verdampferbereich 16, in welchem nach einer entsprechenden Vorwärmung flüssiges Wärmeträgermedium solar verdampft wird. An den Verdampferbereich 16 schließt sich ein Überhitzerbereich 18 an, an welchem in dem Verdampferbereich 16 erzeugter Dampf überhitzt wird. Aus dem Überhitzerbereich 18 austretendes überhitztes Wärmeträgermedium wird einer Turbine 20 zugeführt.

In Figur 1(c) ist schematisch der Temperaturverlauf über der Länge I entlang der Durchlaufstrecke 10 gezeigt. Ein Anfang der Durchlaufstrecke ist mit 21 bezeichnet. In einem Betriebsmodus mit solarer Einstrahlung schließt sich an den Anfang 21 zunächst ein Vorwärmbereich 22 an, in welchem ein Temperaturanstieg und insbesondere mindestens näherungsweise linearer Temperaturanstieg erfolgt. Daran schließt sich der Verdampferbereich 16 an, in welchem die Verdampfung erfolgt. In dem Verdampferbereich 16 ist die Temperatur mindestens näherungsweise ortsunabhängig. Der Verdampferbereich 16 endet mit einem Verdampfungsendpunkt 24. In dem Vorwärmbereich 22 nimmt das Wärmeträgermedium sensible Wärme auf. In dem Verdampferbereich 16 nimmt es latente Wärme auf.

Auf den Verdampfungsendpunkt 24 folgt der Überhitzerbereich 18. Im Überhitzerbereich 18 nimmt das dampfförmige Wärmeträgermedium sensible Wärme auf. Die Temperatur steigt in dem Überhitzerbereich längs der Durchlaufstrecke 10 an. Der Anstieg ist mindestens näherungsweise linear.

In der Durchlaufstrecke 10 erfolgt eine Direktverdampfung. Das in die Durchlaufstrecke 10 eingeleitete flüssige Wärmeträgermedium wird längs der Durchlaufstrecke 10 solar vorgewärmt, verdampft und überhitzt. Der überhitzte Dampf wird der Turbine 20 bereitgestellt. Bei einem solarthermischen Kraftwerk schwankt der solare Energieeintrag. Dadurch verändert sich bei dem Durchlaufkonzept, wie es anhand der Figur 1(a) erläutert ist, der Ort des Verdampfungsendpunkts 24. Dies ist in Figur 1(a) durch den Doppelpfeil mit dem Bezugszeichen 26 angedeutet. Diese Schwankungen im Ort des Verdampfungsendpunkts 24 führen zu hohen oszillierenden Temperaturgradienten innerhalb eines Rohrs 28 der Durchlaufstrecke 10. Die Oszillation entsteht zunächst in axialer Richtung (in einer Richtung parallel zur Längsrichtung der Durchlaufstrecke 10) und infolge davon entstehen auch oszillierende Temperaturgradienten in radialer und tangentialer Richtung. Diese Temperaturgradienten verursachen wiederum thermische Spannungen im Werkstoff des Rohrs 28. Dadurch wird die Dauerfestigkeit der betroffenen Komponenten verringert.

Wenn im Vergleich zum Idealfall die Bestrahlung zu groß ist oder der Massenstrom an Wärmeträgermedium zu gering ist, dann verschiebt sich der Verdampfungsendpunkt 24 in Richtung zu dem Anfang 21 hin. Dies ist in Figur 1(c) durch die Kurve 18' angedeutet. Wenn die Bestrahlung zu gering ist oder der Massenstrom zu groß ist, dann verschiebt sich der Verdampfungsendpunkt 24 weg von dem Anfang 21. Dies ist in Figur 1(c) durch die Kurve mit dem Bezugszeichen 18" angedeutet. Eine Schwankung des Massenstroms und/oder eine Schwankung der Einstrahlungsbedingungen führt zu einer ständigen Fluktuation des Verdampfungsendpunkts 24.

Beim Rezirkulationskonzept (welches in Figur 1(b) schematisch dargestellt ist) ist eine Durchlaufstrecke 30 in einen Verdampferstrang 32 und einen Überhitzerstrang 34 aufgeteilt. Zwischen dem Verdampferstrang 32 und dem Überhitzerstrang 34 ist ein Abscheider 36 angeordnet. Ein Ausgang des Verdampferstrangs 32 führt in den Abscheider 36. Von dem Abscheider 36 ist der Überhitzerstrang 34 fortgeführt. Ein weiterer Ausgang des Abscheiders 36 ist fluidwirksam mit einer Leitung 38 verbunden. Diese Leitung 38 wiederum ist fluidwirksam mit einem Anfang 40 des Verdampfungsstrangs 32 verbunden. In der Leitung 38 ist vorzugsweise eine Pumpe 42 angeordnet. Die Leitung 38 bildet eine Rezirkulationsleitung, durch welche flüssiges Wärmeträgermedium von einem Ausgang des Verdampfungsstrangs 32 an den Anfang 40 rezirkuliert wird.

Durch die Position des Abscheiders 36 wird der Verdampfungsendpunkt gewissermaßen hardwaremäßig festgelegt.

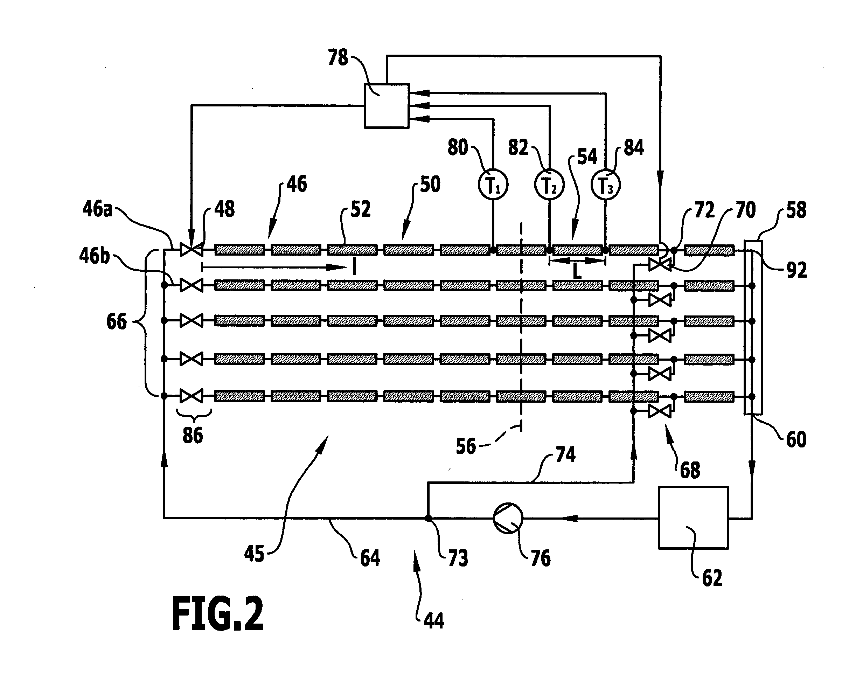

Ein erstes Ausführungsbeispiel eines erfindungsgemäßen solarthermischen Kraftwerks, welches in Figur 2 gezeigt und mit 44 bezeichnet ist, umfasst eine Dampferzeugungsstufe 45 mit einer Mehrzahl von parallel angeordneten Durchlaufstrecken 46 (46a, 46b, usw.). Es folgt ein Verdampferbereich 50 mit einer solaren Kollektoreinrichtung 52. Die solare Kollektoreinrichtung 52 umfasst beispielsweise eine Mehrzahl von Rinnenkollektoren.

Auf den Verdampferbereich 50 folgt in der Durchlaufstrecke 46 ein Überhitzerbereich 54. Dieser ist ebenfalls an der solaren Kollektoreinrichtung 52 angeordnet. Zwischen dem Verdampferbereich 50 und dem Überhitzerbereich 54 liegt der Verdampfungsendpunkt 56. Dieser kann innerhalb eines Rinnenkollektors liegen. Wie untenstehend noch näher erläutert wird, ist es das Ziel bei dem erfindungsgemäßen Regelungsverfahren, den Verdampfungsendpunkt 56 räumlich, d. h. längs der Durchlaufstrecke 10, zu fixieren und dadurch den Verdampfungsendpunkt 56 örtlich festzulegen.

An die Überhitzerbereiche 54 der Durchlaufstrecken 46 schließt sich eine Sammeleinrichtung 58 an. In dieser wird der überhitzte Dampf der Kollektorstränge der parallelen Durchlaufstrecken 46 gesammelt.

Die Sammeleinrichtung 58, welche Eingänge entsprechend der Mehrzahl der Durchlaufstrecken 46 aufweist, ist mit einem Ausgang 60 fluidwirksam an einen Leistungsblock 62 gekoppelt. Der Leistungsblock 62 umfasst (mindestens) eine Turbine und einen Generator für elektrischen Strom.

Von dem Leistungsblock 62 führt eine Rückleitung 64 zu einer als Ganzes mit 66 bezeichneten Aufteilungseinrichtung, durch welche der Strom an flüssigem Wärmeträgermedium auf die einzelnen Durchlaufstrecken 46 aufgeteilt wird.

Dem Überhitzerbereich 54 ist eine als Ganzes mit 68 bezeichnete Einspritzeinrichtung zugeordnet. Durch diese lässt sich flüssiges Wärmeträgermedium in den Überhitzerbereich 54 einspritzen, um eine Austrittstemperatur an überhitztem Dampf aus dem Überhitzerbereich 54 einstellen zu können. Dies wird untenstehend noch näher erläutert. Dadurch kann die Eintrittstemperatur von überhitztem Dampf in den Leistungsblock 62 fixiert werden.

Die Einspritzeinrichtung 68 umfasst beispielsweise jeweils ein der entsprechenden Durchlaufstrecke 46 zugeordnetes Regelventil 70. Durch ein solches Regelventil 70 ist die Menge des eingespritzten flüssigen Wärmeträgermediums einstellbar (einschließlich der Einstellmöglichkeit, dass kein flüssiges Wärmeträgermedium eingespritzt wird).

Die Einspritzeinrichtung 68 weist an der jeweiligen Durchlaufstrecke 46 eine Einspritzstelle 72 auf, welche, wie untenstehend noch näher erläutert wird, Temperatursensoren, welche Temperaturmesswerte zur Durchführung des erfindungsgemäßen Regelungsverfahrens bereitstellen, nachgeordnet ist.

An der Leitung 64 ist eine Abzweigung 73 angeordnet, von welcher eine Leitung 74 abzweigt, mit welcher wiederum die Regelventile 70 der jeweiligen Durchlaufstrecken 46 fluidwirksam verbunden sind. Durch die Abzweigung 73 lässt sich flüssiges Wärmeträgermedium auskoppeln und zur Einspritzung in die Überhitzerbereiche 54 der Durchlaufstrecken 46 verwenden.

An der Rückleitung 64 ist eine Pumpe 76 zur Förderung des Wärmeträgermediums angeordnet.

Das solarthermische Kraftwerk 44 umfasst eine Regelungseinrichtung 78. Durch diese erfolgt eine derartige Regelung, dass der Verdampfungsendpunkt 56 örtlich fixiert wird.

An dem Verdampferbereich 50 ist ein erster Temperatursensor 80 angeordnet. Dieser misst die Temperatur im dampfförmigen Wärmeträgermedium. Der erste Temperatursensor 80 ist dabei außerhalb eines Vorwärmbereichs angeordnet.

Im Überhitzerbereich sind ein zweiter Temperatursensor 82 und ein dritter Temperatursensor 84 beabstandet zueinander angeordnet. Der entsprechende Abstand ist in Figur 2 mit L bezeichnet. Dieser Abstand kann dabei größer, gleich oder kleiner als die Länge beispielsweise eines Rinnenkollektors sein. Der zweite Temperatursensor 82 und der dritte Temperatursensor 84 sind bezogen auf die Strömungsrichtung von Wärmeträgermedium in einer Durchlaufstrecke 46 vor der Einspritzstelle 72 angeordnet. Der erste Temperatursensor 80, der zweite Temperatursensor 82 und der dritte Temperatursensor 84 sind signalwirksam mit der Regelungseinrichtung 78 verbunden. Die entsprechenden Temperaturmesswerte (T₁, T₂ und T₃) dieser Temperatursensoren werden an die Regelungseinrichtung 78 zur weiteren Auswertung und Bearbeitung übergeben.

Die Regelventile 48 der Durchlaufstrecke 46 bilden eine Massenstromregelungseinrichtung 86. Diese Regelventile 48 erlauben eine Einstellbarkeit des Massenstroms in den jeweiligen Durchlaufstrecken 46. Die Regelventile 48 sind durch die Regelungseinrichtung 78 angesteuert, so dass über die Regelungseinrichtung 78 der Massenstrom an Wärmeträgermedium einstellbar ist.

Die Regelungseinrichtung 78 ist beispielsweise signalwirksam mit der Einspritzeinrichtung 68 und insbesondere deren Regelventile 70 verbunden. Die Regelungseinrichtung 78 steuert die Regelventile 70 an. Es kann für die Regelung der Überhitzereinspritzung auch eine von der Regelungseinrichtung 78 getrennte Einrichtung vorgesehen sein.

In Figur 2 sind die Verbindungen zwischen der Regelungseinrichtung 78 und Elementen der Durchlaufstrecken 46 nur noch für die Durchlaufstrecke 46a gezeigt. Die gleichen Verbindungen existieren für die anderen Durchlaufstrecken.

Erfindungsgemäß wird überhitzter Dampf wie folgt erzeugt:

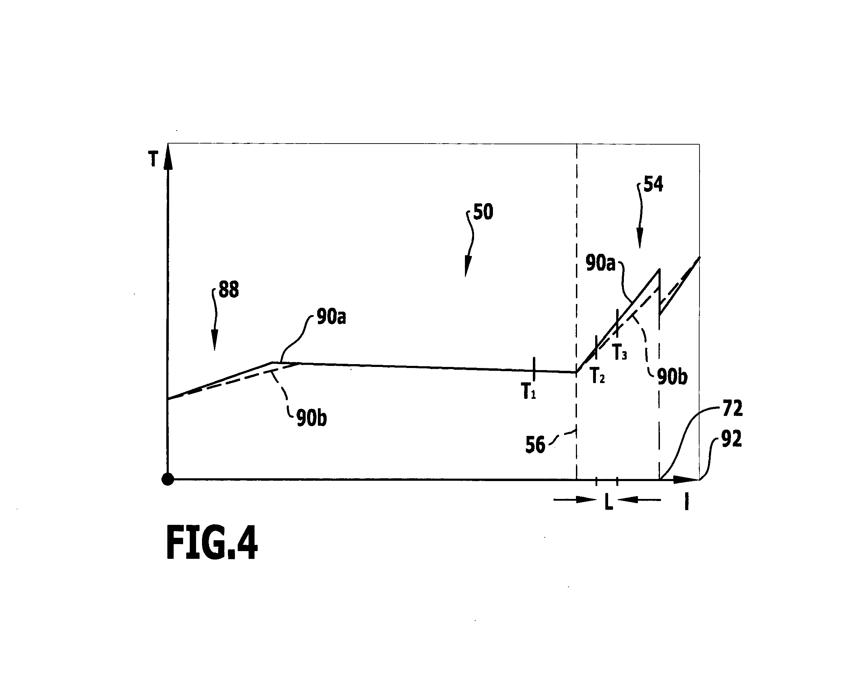

Flüssiges Wärmeträgermedium (insbesondere Speisewasser) wird auf die einzelnen parallelen Durchlaufstrecken 46 aufgeteilt. In den jeweiligen Durchlaufstrecken 46 wird Wärmeträgermedium in einem Vorwärmbereich 88 (Figur 4) vorgewärmt. In diesem Bereich nimmt das Wärmeträgermedium im Wesentlichen sensible Wärme auf.

An den Vorwärmbereich 88 schließt sich der Verdampferbereich 50 an. In diesem Bereich nimmt das Wärmeträgermedium im Wesentlichen latente Wärme auf. Es erfolgt eine Verdampfung. In dem Überhitzerbereich 54 erfolgt die Überhitzung.

Die Temperatur T₁ wird durch den ersten Temperatursensor 80 vor dem Verdampfungsendpunkt 56 gemessen. Der zweite Temperatursensor 82 misst die entsprechende Temperatur T₂ und der dritte Temperatursensor 84 die Temperatur T₃ in dem Überhitzerbereich 54 nach dem Verdampfungsendpunkt 56.

Die Regelungseinrichtung 78 bestimmt den Gradienten ΔT/L = (T₃ - T₂)/L in dem Überhitzerbereich 54. Der Temperaturwert T₁ wird zu größeren Längen I hin extrapoliert und der Gradient zu kleineren Längen hin. Der Schnittpunkt wird bestimmt. Dieser Schnittpunkt entspricht einem Istwert für die Lage des Verdampfungsendpunkts 56. Der Abstand zu dem Sollwert (Führungsgröße), nämlich der vorgegebenen Lage des Verdampfungsendpunkts 56, wird bestimmt. Dieser Abstand wiederum bestimmt eine Stellgröße zur Beeinflussung des Massenstroms an der entsprechenden Durchlaufstrecke 46. Die Stellgröße ist beispielsweise ein Ventilhub des entsprechenden Regelventils 48. Entsprechend der Abweichung wird in einem kontinuierlichen Regelungsprozess der Massenstrom erniedrigt oder erhöht, um den Istwert dem Sollwert anzugleichen. Der Massenstrom an jeder Durchlaufstrecke 46 wird ausgehend von dem ermittelten Temperaturgradienten ΔT/L und der gemessenen Temperatur T₁ eingestellt, um den Verdampfungsendpunkt 56 örtlich zu fixieren. Diese örtliche Fixierung ist gewissermaßen eine "Software-Fixierung".

In Figur 4 ist schematisch mit dem Bezugszeichen 90a ein erster Fall mit hoher Bestrahlung und mit dem Bezugszeichen 90b ein zweiter Fall mit geringer Bestrahlung im Temperaturverlauf über der Länge I gezeigt. Der Fall mit geringerer Bestrahlung (90b) weist einen längeren Vorwärmbereich auf. Der Gradient im Überhitzerbereich 54 ist kleiner als für den Fall 90a. Dies erfordert es für den Fall 90b im Vergleich zu dem Fall 90a, den Massenstrom in der entsprechenden Durchlaufstrecke 46 zu erniedrigen.

Die Regelungseinrichtung 78 steuert auch die Einspritzeinrichtung 68 an. Ziel ist es, an einem Ausgang 92 der Durchlaufstrecke 46 und damit am Ausgang des Überhitzerbereichs 54 eine bestimmte Temperatur (angepasst an die Turbine des Leistungsblocks 62) einzustellen und auch zu fixieren. Dies kann durch geregelte Einspritzung einer bestimmten Menge an flüssigem Wärmeträgermedium erfolgen.

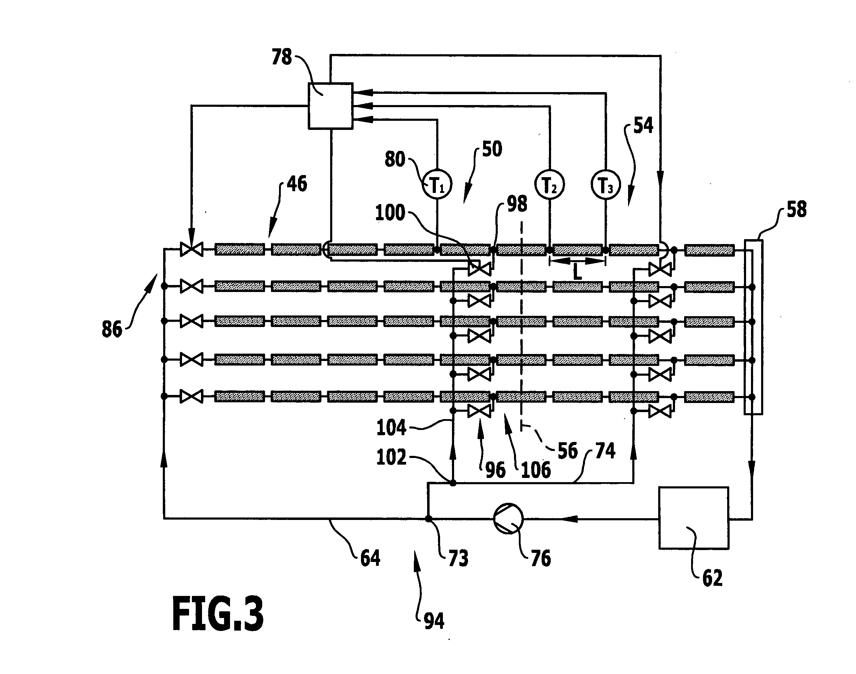

Ein zweites Ausführungsbeispiel eines erfindungsgemäßen solarthermischen Kraftwerks, welches in Figur 3 schematisch gezeigt und dort mit 94 bezeichnet ist, ist grundsätzlich gleich aufgebaut wie das solarthermische Kraftwerk 44. Für gleiche Elemente werden gleiche Bezugszeichen verwendet. Es ist eine zusätzliche Einspritzeinrichtung 96 vorgesehen, durch welche flüssiges Wärmeträgermedium in den Verdampferbereich 50 einspritzbar ist. An den jeweiligen Durchlaufstrecken 46 ist dabei eine Einspritzstelle 98 in dem Verdampferbereich 50 dem ersten Temperatursensor 80 nachfolgend angeordnet, d. h. die jeweilige Einspritzstelle 98 liegt zwischen dem ersten Temperatursensor 80 und dem Verdampfungsendpunkt 56.

Die Einspritzeinrichtung weist beispielsweise jeder Durchlaufstrecke 46 zugeordnet ein Regelventil 100 auf. Die Regelventile 100 sind fluidwirksam mit der Rückleitung 64 verbunden. Beispielsweise führt von einer Abzweigung 102 eine Leitung 104 zu den Regelventilen 100 der Durchlaufstrecken 46. Die Abzweigung 102 wiederum ist beispielsweise an der Rückleitung 64 angeordnet oder an der Leitung 74.

Die Regelungseinrichtung 78 steuert die Einspritzeinrichtung 96 mit den Regelventilen 100 an.

Die Einspritzeinrichtung 96 bildet eine Massenstromregelungseinrichtung. Durch sie ist der Massenstrom an Wärmeträgermedium in der Durchlaufstrecke 46 beeinflussbar. Die Regelventile 48 bilden dann eine erste Massenstromregelungseinrichtung 86 und die Einspritzeinrichtung 96 bildet eine zweite Massenstromregelungseinrichtung 106.

Durch die Einspritzeinrichtung 96, d. h. durch Vorsehen der zweiten Massenstromregelungseinrichtung 106, lässt sich die Regelqualität verbessern und die Regelschnelligkeit erhöhen.

Bei der erfindungsgemäßen Lösung lässt sich der Verdampfungsendpunkt 56 durch ein Regelungsverfahren örtlich fixieren, um Oszillationen des Verdampfungsendpunkts 56 bei schwankendem solaren Energieeintrag zu minimieren. Die parallel angeordneten Durchlaufstrecken sind Kollektorstränge. Für jeden Kollektorstrang (für jede Durchlaufstrecke 46) wird der Verdampfungsendpunkt 56 fixiert.

Durch Extrapolation des ermittelten Temperaturgradienten im Verdampferbereich 54 in Richtung Kollektorstrangeintritt wird ein Istwert für den Verdampfungsendpunkt ermittelt, um auf den Sollwert (Führungsgröße) zu regeln. Geregelt wird dabei der Massenstrom an Wärmeträgermedium in dem jeweiligen Kollektorstrang, d. h. in der jeweiligen Durchlaufstrecke 60. Der Massenstrom wird dabei durch Einstellung der in die jeweilige Durchlaufstrecke 60 eingekoppelten Menge an flüssigem Wärmeträgermedium realisiert. Dies erfolgt primär über die erste Massenstromregelungseinrichtung 46 mit den Regelventilen 48. Zusätzlich kann noch eine zweite Massenstromregelungseinrichtung 106 mit den Regelventilen 100 vorgesehen sein.

Bei der erfindungsgemäßen Lösung wird zusätzlich noch die gemessene Temperatur T₁ zur Bestimmung des Istwerts für den Verdampfungsendpunkt ermittelt. Es ergibt sich dadurch eine stabile Regelung und im Realbetrieb kann die Schwankungsbreite des Verdampfungsendpunkts 56 auf einen sehr kleinen Bereich eingeschränkt werden.

Durch eine zusätzlich vorgesehene Einspritzung an entsprechenden Einspritzstellen 98 lässt sich die Regelqualität verbessern und die Regelschnelligkeit stark erhöhen.

Durch die Fixierung des Verdampfungsendpunkts 56 ist eine Regelung der Ausgangstemperatur der jeweiligen Kollektorstränge notwendig. Es wird dabei insbesondere auf eine konstante Austrittstemperatur geregelt.

Die erfindungsgemäße Lösung lässt sich kostengünstiger realisieren als eine Lösung nach dem Rezirkulationskonzept. Darüber hinaus treten geringere Wärmeverluste des Gesamtsystems auf. Es ist grundsätzlich möglich, die örtliche Lage des Verdampfungsendpunkts 56 "softwaremäßig" einzustellen und beispielsweise auch näher an den Anfang eines Kollektorstrangs zu schieben. Es ergeben sich geringe Materialbelastungen und damit auch ein länger möglicher Anlagenbetrieb bei verbesserter Regelbarkeit.

## Patentansprüche

1. Verfahren zur Erzeugung von überhitztem Dampf an einem solarthermischen Kraftwerk, bei dem in einer Durchlaufstrecke für Wärmeträgermedium durch Solarenergie in einem Verdampferbereich Dampf erzeugt wird und in einem Überhitzerbereich durch Solarenergie der Dampf überhitzt wird, wobei ein Verdampfungsendpunkt des Verdampferbereichs in einem Regelungsverfahren örtlich fixiert wird, bei dem ein räumlicher Temperaturgradient in dem Überhitzerbereich und eine Temperatur im Verdampferbereich bestimmt werden und der Massenstrom an Wärmeträgermedium in der Durchlaufstrecke in Abhängigkeit des Temperaturgradienten im Überhitzerbereich und der gemessenen Temperatur im Verdampferbereich eingestellt wird.

2. Verfahren nach Anspruch 1, **dadurch gekennzeichnet, dass** zur Fixierung des Verdampfungsendpunkts der Massenstrom des Wärmeträgermediums in der Durchlaufstrecke geregelt wird.

3. Verfahren nach Anspruch 1 oder 2, **dadurch gekennzeichnet, dass** eine Regelgröße im Regelungsverfahren die räumliche Lage des Verdampfungsendpunkts ist, wobei eine Führungsgröße ein definierter Ort ist.

4. Verfahren nach einem der vorangehenden Ansprüche, **dadurch gekennzeichnet, dass** eine Stellgröße im Regelungsverfahren den Massenstrom des Wärmeträgermediums in der Durchlaufstrecke bestimmt.

5. Verfahren nach einem der vorangehenden Ansprüche, **dadurch gekennzeichnet, dass** im Regelungsverfahren der Temperaturgradient und die gemessene Temperatur im Verdampfungsbereich auf einen räumlichen Schnittpunkt extrapoliert werden und eine oder mehrere Stellgrößen durch eine Abweichung des Schnittpunkts von einer vorgegebenen räumlichen Lage des Verdampfungsendpunkts bestimmt werden.

6. Verfahren nach einem der vorangehenden Ansprüche, **dadurch gekennzeichnet, dass** die Temperatur im Verdampferbereich außerhalb eines Vorwärmbereichs gemessen wird.

7. Verfahren nach einem der vorangehenden Ansprüche, **dadurch gekennzeichnet, dass** der Temperaturgradient aus den gemessenen Temperaturen an mindestens zwei beabstandeten Orten im Überhitzerbereich ermittelt wird.

8. Verfahren nach einem der vorangehenden Ansprüche, **dadurch gekennzeichnet, dass** flüssiges Wärmeträgermedium in den Verdampferbereich geregelt eingespritzt wird, und insbesondere, dass die Einspritzung zwischen der Temperaturmessstelle und dem Verdampfungsendpunkt erfolgt.

9. Verfahren nach einem der vorangehenden Ansprüche, **dadurch gekennzeichnet, dass** eine Austrittstemperatur am Überhitzerbereich auf einen konstanten Wert geregelt wird, und insbesondere, dass in den Überhitzerbereich geregelt flüssiges Wärmeträgermedium eingespritzt wird.

10. Solarthermisches Kraftwerk mit einer Dampferzeugungsstufe (45), umfassend mindestens einen Kollektorstrang mit einer Durchlaufstrecke (46) für Wärmeträgermedium mit einem Verdampferbereich (50) und einem Überhitzerbereich (54), einen ersten Temperatursensor (80), welcher an dem Verdampferbereich (50) angeordnet ist, einen zweiten Temperatursensor (82) und einen dritten Temperatursensor (84), welche beabstandet zueinander an dem Überhitzerbereich (54) angeordnet sind, eine Massenstromregelungseinrichtung (86; 106), durch welche der Massenstrom an Wärmeträgermedium in der Durchlaufstrecke (46) einstellbar ist, und eine Regelungseinrichtung (78), welche signalwirksam mit dem ersten Temperatursensor (80), dem zweiten Temperatursensor (82) und dem dritten Temperatursensor (84) verbunden ist, aus einer zweiten Temperatur (T₂) und einer dritten Temperatur (T₃) einen räumlichen Temperaturgradienten (ΔT/L) bestimmt und die Massenstromregelungseinrichtung (86; 106) zur Fixierung eines Verdampfungsendpunkts (56) ansteuert.

11. Solarthermisches Kraftwerk nach Anspruch 10, **dadurch gekennzeichnet, dass** an einem Anfang der Durchlaufstrecke (46) ein Regelventil (48) angeordnet ist, welches durch die Regelungseinrichtung (78) angesteuert ist.

12. Solarthermisches Kraftwerk nach Anspruch 10 oder 11, **gekennzeichnet durch** eine Einspritzeinrichtung (96) zur Einspritzung von flüssigem Wärmeträgermedium mit mindestens einer Einspritzstelle (98) in den Verdampferbereich (50), und insbesondere, dass die Einspritzeinrichtung (96) **durch** die Regelungseinrichtung (78) angesteuert ist, und insbesondere, dass die Einspritzeinrichtung (96) ein Regelventil (100) umfasst, und insbesondere, dass die mindestens eine Einspritzstelle (98) der Einspritzeinrichtung (96) zwischen einem Temperaturmesspunkt des ersten Temperatursensors (80) und dem Verdampfungsendpunkt (56) liegt.

13. Solarthermisches Kraftwerk nach einem der Ansprüche 10 bis 12, **gekennzeichnet durch** eine Einspritzeinrichtung (68) zur Einspritzung von flüssigem Wärmeträgermedium mit mindestens einer Einspritzstelle (72) in den Überhitzerbereich (54).

14. Solarthermisches Kraftwerk nach einem der Ansprüche 10 bis 13, **gekennzeichnet durch** eine solare Kollektoreinrichtung (52), an welcher die Durchlaufstrecke (46) angeordnet ist.

15. Solarthermisches Kraftwerk nach einem der Ansprüche 10 bis 14, **dadurch gekennzeichnet, dass** die Dampferzeugungsstufe (45) fluidwirksam mit mindestens einer Turbine verbunden ist.

## Claims

1. Method of generating superheated steam in a solar thermal power plant, in which in a flow section for heat transfer medium steam is generated by solar energy in an evaporator zone and the steam is superheated by solar energy in a superheater zone, wherein an evaporation end point of the evaporator zone is fixed in position in a control method, in which a spatial temperature gradient in the superheater zone and a temperature in the evaporator zone are determined and the mass flow of heat transfer medium in the flow section is adjusted in dependence upon the temperature gradient and the measured temperature in the evaporator zone.

2. Method in accordance with claim 1, **characterized in that** for fixing the evaporation end point the mass flow of the heat transfer medium in the flow section is controlled.

3. Method in accordance with claim 1 or 2, **characterized in that** a controlled variable in the control method is the spatial position of the evaporation end point, and a reference variable is a defined location.

4. Method in accordance with any one of the preceding claims, **characterized in that** a manipulated variable in the control method determines the mass flow of the heat transfer medium in the flow section.

5. Method in accordance with any one of the preceding claims, **characterized in that** in the control method the temperature gradient and the measured temperature in the evaporator zone are extrapolated to a spatial point of intersection and one or more manipulated variables are determined by means of a deviation of the point of intersection from a predetermined spatial position of the evaporation end point.

6. Method in accordance with any one of the preceding claims, **characterized in that** the temperature in the evaporator zone is measured outside of a preheating zone.

7. Method in accordance with any one of the preceding claims, **characterized in that** the temperature gradient is determined from the measured temperatures at at least two spaced-apart locations in the superheater zone.

8. Method in accordance with any one of the preceding claims, **characterized in that** liquid heat transfer medium is injected in a controlled manner into the evaporator zone and in particular **in that** the injection is effected between the temperature measuring point and the evaporation end point.

9. Method in accordance with any one of the preceding claims, **characterized in that** an outlet temperature at the superheater zone is controlled to a constant value and in particular **in that** liquid heat transfer medium is injected in a controlled manner into the superheater zone.

10. Solar thermal power plant having a steam generating stage (45), comprising at least one collector branch having a flow section (46) for heat transfer medium comprising an evaporator zone (50) and a superheater zone (54), a first temperature sensor (80) that is disposed at the evaporator zone (50), a second temperature sensor (82) and a third temperature sensor (84) that are disposed spaced apart from one another at the superheater zone (54), a mass flow control device (86; 106) by means of which the mass flow of heat transfer medium in the flow section (46) is adjustable, and a control device (78) that is operatively connected for signal communication with the first temperature sensor (80), the second temperature sensor (82) and the third temperature sensor (84), determines from a second temperature (T₂) and a third temperature (T₃) a spatial temperature gradient (ΔT/L) and controls the mass flow control device (86; 106) in order to fix an evaporation end point (56).

11. Solar thermal power plant in accordance with claim 10, **characterized in that** there is disposed at a start of the flow section (46) a control valve (48) which is controlled by the control device (78).

12. Solar thermal power plant in accordance with claim 10 or 11, **characterized by** an injection device (96) for injecting liquid heat transfer medium by means of at least one injection point (98) into the evaporator zone (50) and in particular in that the injection device (96) is controlled by the control device (78), and in particular in that the injection device (96) comprises a control valve (100), and in particular in that the at least one injection point (98) of the injection device (96) lies between a temperature measuring point of the first temperature sensor (80) and the evaporation end point (56).

13. Solar thermal power plant in accordance with any one of claims 10 to 12, **characterized by** an injection device (68) for injecting liquid heat transfer medium by means of at least one injection point (72) into the superheater zone (54).

14. Solar thermal power plant in accordance with any one of claims 10 to 13, **characterized by** a solar collector device (52) at which the flow section (46) is disposed.

15. Solar thermal power plant in accordance with any one of claims 10 to 14, **characterized in that** the steam generating stage (45) is operatively connected for fluid communication with at least one turbine.

## Revendications

1. Procédé servant à produire de la vapeur surchauffée dans une centrale héliothermique, dans le cadre duquel de la vapeur est produite sur un tronçon de passage pour milieu caloporteur sous l'effet de l'énergie solaire dans une zone d'évaporation et la vapeur est surchauffée dans une zone de surchauffe sous l'effet de l'énergie solaire, un point final d'évaporation de la zone d'évaporation étant fixé de manière locale selon un procédé de régulation, dans le cadre duquel sont déterminés un gradient de température spatial dans la zone de surchauffe et une température dans la zone d'évaporation et le débit massique en milieu caloporteur est réglé sur le tronçon de passage en fonction du gradient de température dans la zone de surchauffe et en fonction de la température mesurée dans la zone d'évaporation.

2. Procédé selon la revendication 1, **caractérisé en ce que** le débit massique du milieu caloporteur est réglé sur le tronçon de passage pour fixer le point terminal d'évaporation.

3. Procédé selon la revendication 1 ou 2, **caractérisé en ce qu'**une grandeur de régulation est, dans le procédé de régulation, la position spatiale du point terminal d'évaporation, une grandeur de référence étant un lieu défini.

4. Procédé selon l'une quelconque des revendications précédentes, **caractérisé en ce qu'**une grandeur d'ajustage détermine, dans le procédé de régulation, le débit massique du milieu caloporteur sur le tronçon de passage.

5. Procédé selon l'une quelconque des revendications précédentes, **caractérisé en ce que** le gradient de température et la température mesurée sont, dans le procédé de régulation, extrapolés dans la zone d'évaporation sur un point d'intersection spatial, et **en ce qu'**une ou plusieurs grandeurs d'ajustage sont déterminées par une position spatiale prédéfinie du point terminal d'évaporation du fait d'une déviation du point d'intersection.

6. Procédé selon l'une quelconque des revendications précédentes, **caractérisé en ce que** la température est mesurée dans la zone d'évaporation en dehors d'une zone de préchauffage.

7. Procédé selon l'une quelconque des revendications précédentes, **caractérisé en ce que** le gradient de température est calculé à partir des températures mesurées au niveau au moins de deux endroits espacés dans la zone de surchauffe.

8. Procédé selon l'une quelconque des revendications précédentes, **caractérisé en ce qu'**on injecte de manière régulée un milieu caloporteur fluide dans la zone d'évaporation, et en particulier en ce que l'injection est effectuée entre le point de mesure de la température et le point terminal d'évaporation.

9. Procédé selon l'une quelconque des revendications précédentes, **caractérisé en ce qu'**une température de sortie est régulée au niveau de la zone de surchauffe sur une valeur constante, et en particulier **en ce qu'**un milieu caloporteur fluide est injecté de manière régulée dans la zone de surchauffe.

10. Centrale héliothermique comprenant un étage de production de vapeur (45), comprenant au moins une branche de collecte dotée d'un tronçon de passage (46) pour le milieu caloporteur avec une zone d'évaporation (50) et avec une zone de surchauffe (54), un premier capteur de température (80) qui est disposé au niveau de la zone d'évaporation (50), un deuxième capteur de température (82) et un troisième capteur de température (84), lesquels sont disposés de manière espacée les uns par rapport aux autres au niveau de la zone de surchauffe (54), un système de régulation de débit massique (86 ; 106), lequel permet de régler le débit massique en milieu caloporteur sur le tronçon de passage (46), et un système de régulation (78) qui est relié de manière efficace en termes de signal au premier capteur de température (80), au deuxième capteur de température (82) et au troisième capteur de température (84) et qui détermine à partir d'une deuxième température (T₂) et d'une troisième température (T₃) un gradient de température spatial (ΔT/L) et qui commande le système de régulation de débit massique (86 ; 106) servant à fixer un point terminal d'évaporation (56).

11. Centrale héliothermique selon la revendication 10, **caractérisée en ce qu'**une soupape de régulation (48) est disposée en début de tronçon de passage (46), laquelle est commandée par le système de régulation (78).

12. Centrale héliothermique selon la revendication 10 ou 11, **caractérisée par** un système d'injection (96) servant à injecter un milieu caloporteur fluide avec au moins un point d'injection (98) dans la zone d'évaporation (50), et caractérisée en particulier en ce que le système d'injection (96) est commandé par le système de régulation (78), et en particulier en ce que le système d'injection (96) comprend une soupape de régulation (100), et en particulier en ce que l'au moins un point d'injection (98) du système d'injection (96) se trouve entre un point de mesure de température du premier capteur de température (80) et le point terminal d'évaporation (56).

13. Centrale héliothermique selon l'une quelconque des revendications 10 à 12, **caractérisée par** un système d'injection (68) servant à injecter un milieu caloporteur fluide avec au moins un point d'injection (72) dans la zone de surchauffe (54).

14. Centrale héliothermique selon l'une quelconque des revendications 10 à 13, **caractérisée par** un système de collecte (52) solaire, au niveau duquel est disposé le tronçon de passage (46).

15. Centrale héliothermique selon l'une quelconque des revendications 10 à 14, **caractérisée en ce que** l'étage de production de vapeur (45) est relié de manière fluidiquement efficace à au moins une turbine.
